# EUROPÄISCHE PATENTSCHRIFT

(11) **EP 0 668 179 B1**
(45) Veröffentlichungstag und Bekanntmachung des Hinweises auf die Patenterteilung: **22.10.1997**
(21) Anmeldenummer: 94120352.3
(22) Anmeldetag: 21.12.1994
(51) Int. Cl.: B60K 15/01, B62D 65/00

(54) **Vorgefertigtes Fluidleitungssystem zur Montage in ein Kraftfahrzeug im Zuge der automatischen Bandfertigung**
Preassembled fluid piping, adapted to the mounting into a motor vehicle on an automatised assembly line
Ensemble de conduites de fluide préassemblé, adapté au montage dans un véhicule à moteur sur une chaîne de montage automatisée

(30) Priorität: 17.02.1994 DE 4404879
(43) Veröffentlichungstag der Anmeldung: 23.08.1995
(73) Patentinhaber: Technoflow Tube-Systems GmbH, 34277 Fuldabrück (DE)
(72) Erfinder: Brunnhofer, Erwin, D-34277 Fuldabrück (DE)
(74) Vertreter: Honke, Manfred, Dr.-Ing.

(56) Entgegenhaltungen:
- EP-A- 0 316 606
- EP-A- 0 412 067
- EP-A- 0 454 876
- DE-A- 3 925 171
- US-A- 5 002 244
- PATENT ABSTRACTS OF JAPAN vol. 4, no. 84 (M-16), 17.Juni 1980 & JP-A-55 044084 (NISSAN), 28.März 1980,

## Beschreibung

Die Erfindung bezieht sich auf ein Fluidleitungssystem für ein Kraftfahrzeug, welches aus einer Mehrzahl von aus Metall und/oder Kunststoff gefertigten Rohren besteht, von denen zumindest einige im montierten Zustand über Abbiegungen an zugeordnete Kraftfahrzeugbauteile fluidtechnisch angeschlossen sind. - In Kraftfahrzeugen ist ein Fluidleitungssystem für die verschiedensten Funktionen erforderlich, so im hydraulischen Bremssystem, bei der Kraftstoffversorgung, in Verbindung mit Scheibenwaschanlagen, Zentralschließanlagen, Einrichtungen für die Sitzverstellung, Kühlwasserleitungen, Kühlmittelleitungen einer Klimaanlage u. dgl. Im Rahmen der bekannten Maßnahmen, von denen die Erfindung ausgeht, wird das Fluidleitungssystem bei der Montage aus den einzelnen Rohren, die bereits die Abbiegungen aufweisen, zusammengestellt oder unmittelbar vor dem Einbau aus den Rohren, die bereits die Abbiegungen aufweisen, zusammengestellt. Dabei oder danach werden die Armaturen angebracht. Das ist aufwendig. Im einzelnen ist zum Stand der Technik folgendes zu bemerken:

Im allgemeinen stellen die Hersteller von Kraftfahrzeugen vorgebogene Leitungen des Fluidleitungssystems, mögen diese aus Metall oder aus Kunststoff bestehen, selbst her oder kaufen sie diese bei. Es ist bei verschiedenen Herstellern von Kraftfahrzeugen auch üblich, Bundle aus vorgebogenen Metalleitungen oder vorgebogenen Kunststoffleitungen bei einem Zulieferanten herstellen zu lassen und beizukaufen.

Das führt zu sperrigen Aggregaten, die bei dem Zulieferanten hergestellt und als sperriges Gut transportiert und manipuliert werden müssen. Als Kraftstoffleitungen werden seit langem Kunststoffleitungen eingesetzt. Insoweit handelt es sich zumeist um Bundle aus geraden Leitungen, die im Bereich der Bodengruppe des Kraftfahrzeuges verlegt werden, während im Motor- und Tankbereich vorgebogene Leitungen eingesetzt werden. Diese werden als Einzelleitungen montiert und mit den Bundles verbunden.

Der Erfindung liegt das technische Problem zugrunde, ein Fluidleitungssystem zu schaffen, welches extrem einfach vorgefertigt, transportiert und montiert werden kann.

Zur Lösung dieses technischen Problems ist Gegenstand der Erfindung ein werkmäßig vorgefertigtes Fluidleitungssystem, welches zur Montage in ein Kraftfahrzeug im Zuge der automatischen Bandfertigung von typisierten Kraftfahrzeugen eingerichtet ist und welches aus einer Mehrzahl von aus Metall und/oder Kunststoff gefertigten Rohren besteht, von denen zumindest einige im montierten Zustand über Abbiegungen an zugeordnete Kraftfahrzeugbauteile fluidtechnisch angeschlossen sind, - mit den Merkmalen
a) die einzelnen Rohre sind gerade Rohre, die mit den fluidtechnischen Armaturen, die aus funktionellen Gründen oder aus Anschlußgründen erforderlich sind, ausgerüstet sind,
b) die geraden Rohre sind mit Verbundhilfsmitteln zu einem Fluidleitungs-Bundle vereinigt, welches mit den Befestigungshilfsmitteln zur Befestigung im Kraftfahrzeug bei der Montage ausgerüstet ist,
c) von den geraden Rohren weisen zumindest einige im Bereich der nachträglich zum Zwecke der Montage anzubringenden Abbiegungen durch plastische Verformung biegbare Biegeabschnitte auf,
d) die Biegeabschnitte sind einer Biegemaschine angepaßt, die nach Maßgabe des Kraftfahrzeugtyps, für welchen das Fluidleitungs-Bundle bestimmt ist, arbeitet und eingerichtet ist, um die einzelnen Biegeabschnitte der Rohre des in die Biegemaschine eingeführten Fluidleitungs-Bundles zu biegen,
wobei die Biegemaschine im Bereich der Montagestelle für das Fluidleitungs-Bundle der automatischen Bandfertigung aufstellbar ist. - Werkmäßig vorgefertigt meint im Rahmen der Erfindung, daß die Vorfertigung bei einem Zulieferanten erfolgt ist.

Die Erfindung geht von der Erkenntnis aus, daß, insbes. auch im Zuge einer weitgehend automatisierten Fertigung, gerade Rohre einfach mit allen fluidtechnischen Armaturen, die aus funktionellen Gründen oder aus Anschlußgründen erforderlich sind, versehen werden können. Die insoweit vorbereiteten Rohre lassen sich einfach und ebenfalls im Rahmen einer weitgehend automatisierten Fertigung zu einem Fluidleitungs-Bundle vereinigen, welches mit allen Befestigungshilfsmitteln zur Befestigung im Kraftfahrzeug bei der Montage ausgerüstet ist. Die bei einem Zulieferanten vorgefertigten Fluidleitungs-Bundle aus geraden Rohren können einfach auch verpackt, transportiert und beim Kraftfahrzeughersteller einfach gehandhabt werden. Ein solches Bundle kann aber auch leicht montiert werden, wenn von den geraden Rohren zumindest einige im Bereich der nachträglich zum Zwecke der Montage anzubringenden Abbiegungen durch plastische Verformung biegbare Biegeabschnitte aufweisen. Dabei wird man diejenigen Rohre mit solchen Biegeabschnitten versehen, die zum Zwecke der Montage zum Anschluß an die entsprechenden Bauteile im Kraftfahrzeug abgebogen werden müssen. Das Abbiegen ist einfach, wenn die Biegeabschnitte einer Biegemaschine angepaßt sind, die nach Maßgabe des Kraftfahrzeugtyps, für welchen das Fluidleitungs-Bundle bestimmt ist, arbeitet und die eingerichtet ist, um die einzelnen Biegeabschnitte der Rohre des in die Biegemaschine eingeführten Fluidleitungs-Bundles zu biegen. Diese Biegemaschine steht beim Kraftfahrzeughersteller im Bereich der Montagestelle für das Fluidleitungs-Bundle, welches mit den abgebogenen Abschnitten leicht zum Zwecke der Montage in das an der Montagestelle vorstehende, selbstverständlich noch nicht fertige Kraftfahrzeug eingesetzt werden können.

Im einzelnen bestehen im Rahmen der Erfindung mehrere Möglichkeiten der weiteren Ausbildung und Gestaltung des werkmäßig vorgefertigten Fluidleitungssystems. So sind nach bevorzugter Ausführungsform der Erfindung die geraden Rohre zu einem ebenen Fluidleitungs-Bundle vereinigt und dadurch einer Biegemaschine mit einer entsprechenden Aufnahme für ein ebenes Fluidleitungs-Bundle angepaßt. Die ebenen Fluidleitungs-Bundle können unschwer stapelbar ausgeführt sein. Im Rahmen der Erfindung besteht die Möglichkeit, in dem Fluidleitungs-Bundle auch Rohre aus Kunststoff anzuordnen, die elastisch biegbar sind, wobei diese Rohre im Bereich der Abbiegungen eingeschobene und/oder aufgeschobene Metallrohrabschnitte aufweisen, die durch plastische Verformung biegbare Biegeabschnitte bilden. Man kann die Biegeabschnitte auch als Wellrohrabschnitte ausführen, und zwar sowohl bei Metallrohren als auch bei Kunststoffrohren. Die Befestigungshilfsmittel können zur Befestigung im Kraftfahrzeug an den Rohren angebracht sein. Es besteht auch die Möglichkeit, die Befestigungshilfsmittel zur Befestigung im Kraftfahrzeug an den Verbundhilfsmitteln anzubringen.

Aus fertigungstechnischen Gründen, aus transporttechnischen Gründen und zur Erleichterung der Montage empfiehlt es sich, daß zumindest eines der Rohre als Metallrohr ausgeführt ist und als das Fluidleitungs-Bundle insgesamt aussteifendes Bauteil ausgebildet ist, welches im Bundle gleichsam ein Rückgrat bildet. Im Rahmen der Erfindung liegt es, das Fluidleitungs-Bundle mit Positionierungshilfsmitteln auszurüsten, die Positionierelementen in der Aufnahme der Biegemaschine angepaßt sind.

Gegenstand der Erfindung sind auch die Logistikmaßnahmen für die Herstellung und die Montage der Fluidleitungs-Bundle, die in den Patentansprüchen 9 und 10 beansprucht sind.

Im folgenden wird die Erfindung anhand einer lediglich ein Ausführungsbeispiel darstellenden Zeichnung ausführlicher erläutert. Es zeigen in stark schematischer Darstellung
- Fig. 1: ein erfindungsgemäßes Fluidleitungssystem, vorgefertigt als Fluidleitungs-Bundle,
- Fig. 2: Einzelheiten aus dem Gegenstand der Fig. 1, nämlich die Auslegung der Biegeabschnitte,
- Fig. 3: entsprechend der Fig. 2 eine andere Ausführungsform solcher Einzelheiten,
- Fig. 4: das Fluidleitungs-Bundle nach Fig. 1 auf einer Biegemaschine an der Montagestelle,
- Fig. 5: ein Fluidleitungs-Bundle auf der Biegemaschine nach dem Biegevorgang und
- Fig. 6: ein Fluidleitungs-Bundle, eingebaut in das Kraftfahrzeug, welches an der Montagestelle an einer automatischen Bandfertigung vorsteht.

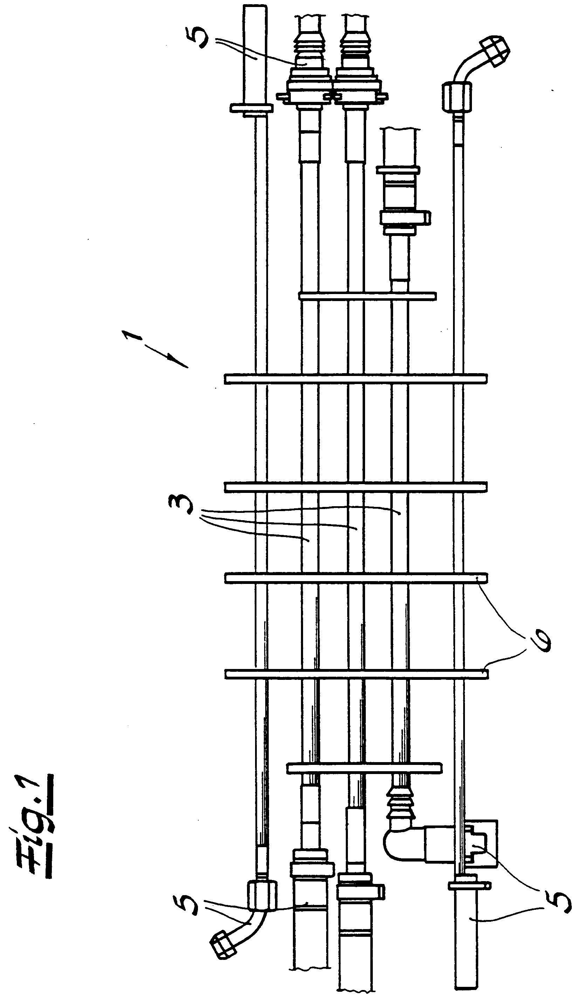

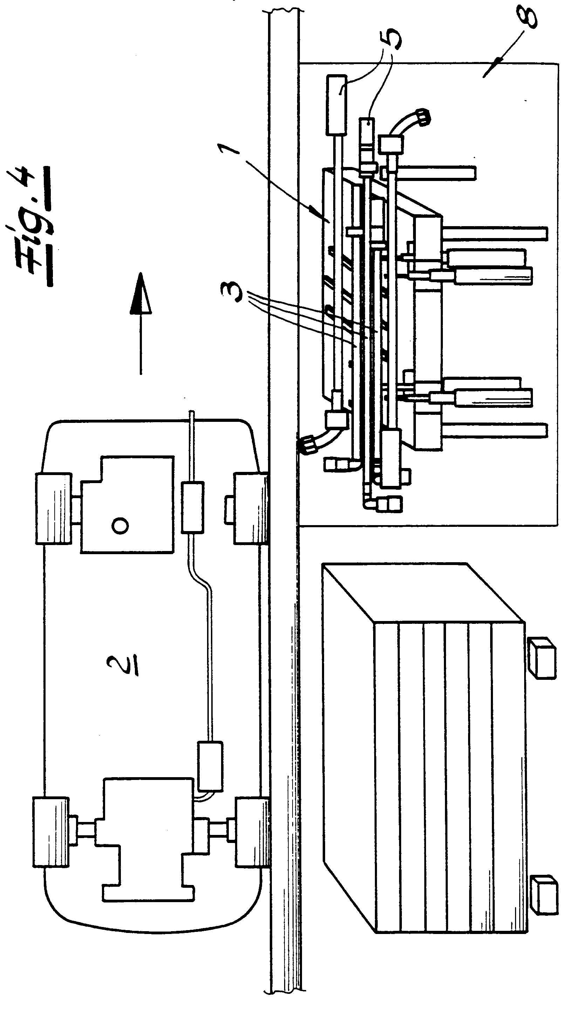

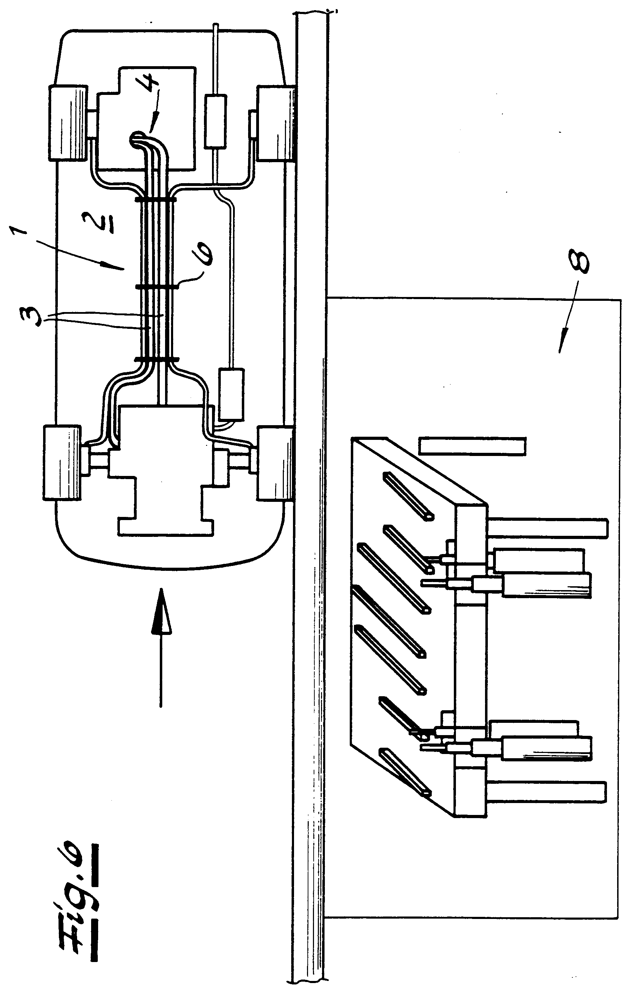

Das in den Figuren dargestellte Fluidleitungssystem ist in Form eines Fluidleitungs-Bundles 1 werkmäßig vorgefertigt, und zwar bei einem Zulieferanten des Kraftfahrzeugherstellers. Es ist zur Montage in ein Kraftfahrzeug 2 im Zuge der automatischen Bandfertigung von typisierten Kraftfahrzeugen eingerichtet. Das Fluidleitungs-Bundle 1 besteht aus einer Mehrzahl von aus Metall und/oder Kunststoff gefertigten Rohren 3, von denen zumindest einige im montierten Zustand über Abbiegungen 4 an zugeordnete Kraftfahrzeugbauteile fluidtechnisch angeschlossen sind. Dazu wird insbes. auf die Fig. 6 verwiesen. Man erkennt in den Fig. 1 und 4, daß die einzelnen Rohre 3 gerade Rohre sind, die mit den fluidtechnischen Armaturen 5, die aus funktionellen Gründen oder aus Anschlußgründen erforderlich sind, versehen sind. Wie die Fig. 1 und 4 erkennen lassen, sind die geraden Rohre mit Verbundhilfsmitteln 6 zu dem Fluidleitungs-Bundle 1 vereinigt, welches die Befestigungshilfsmittel zur Befestigung im Kraftfahrzeug bei der Montage aufweisen. Die Befestigungshilfsmittel wurden nicht gezeichnet.

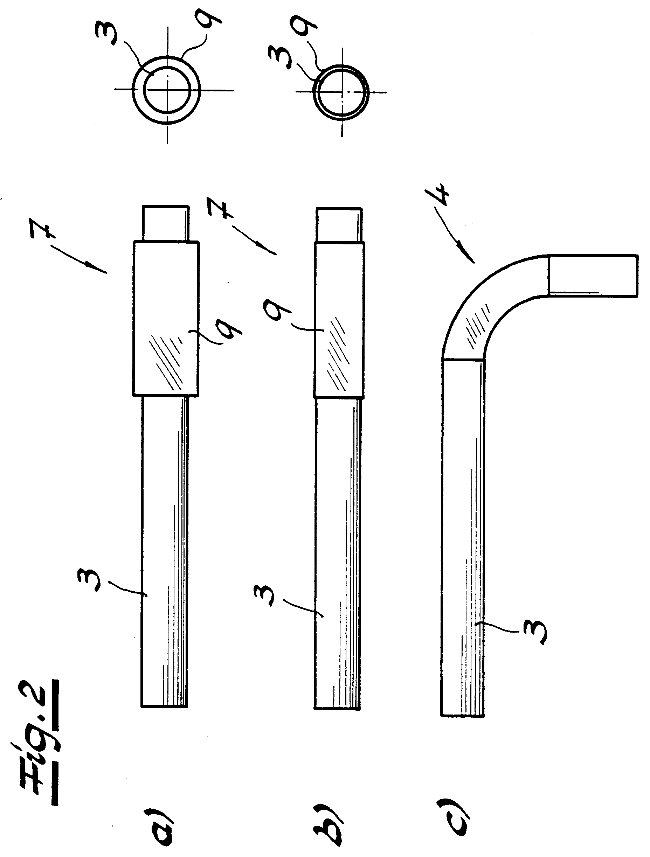

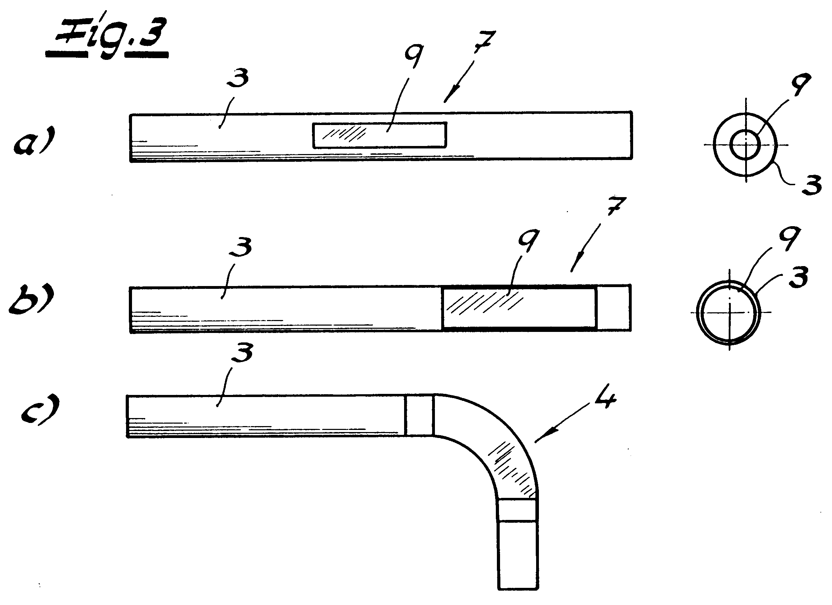

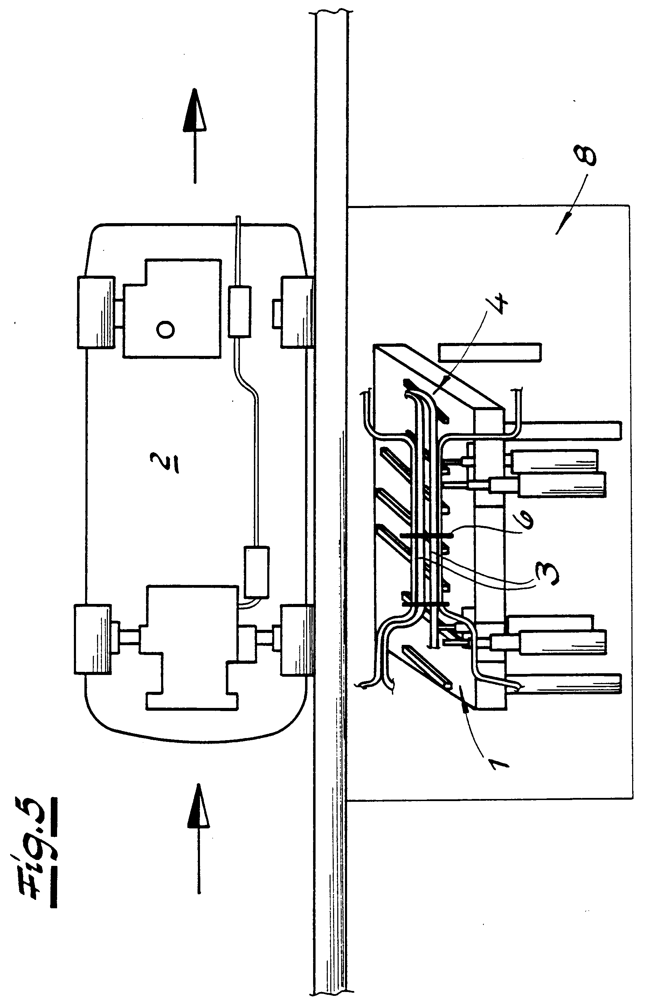

Von den geraden Rohren weisen zumindest einige im Bereich der nachträglich zum Zwecke der Montage anzubringenden Abbiegungen 4 durch plastische Verformung verformbare Biegeabschnitte 7 auf. Deren Gestaltung ist beispielhaft in den Fig. 2 und 3 erläutert. Die Biegeabschnitte 7 sind einer Biegemaschine 8 angepaßt, die nach Maßgabe des Kraftfahrzeugtyps, für welchen das Fluidleitungs-Bundle 1 bestimmt ist, arbeitet und eingerichtet ist, um die einzelnen Biegeabschnitte 7 der Rohre 3 des in die Biegemaschine 8 eingeführten Fluidleitungs-Bundles 1 zu biegen. Insoweit wird auf die Fig. 5 verwiesen. Man erkennt dort auch, daß die Biegemaschine 8 im Bereich der Montagestelle für den Einbau des Fluidleitungs-Bundles 1 in ein Kraftfahrzeug bei der automatischen Bandfertigung aufgestellt ist.

Im Ausführungsbeispiel und nach bevorzugter Ausführungsform der Erfindung sind die geraden Rohre 3 zu einem ebenen Fluidleitungs-Bundle 1 vereinigt. Sie sind dadurch einer Biegemaschine 8 angepaßt, die eine Aufnahme für ebene Fluidleitungs-Bundle 1 aufweist.

In dem dargestellten Fluidleitungs-Bundle 1 mögen einige Rohre 3 aus Kunststoff bestehen und insoweit elastisch biegbar sein. Solche Rohre 3 erkennt man in den Fig. 2 und 3 mit den Teilfig. 2a, 2b, 2c bzw. 3a, 3b, 3c. Auf die elastisch biegbaren Rohre 3 sind im Bereich der später herzustellenden Abbiegungen 4 eingeschobene (Fig. 3) oder aufgeschobene (Fig. 2) Metallrohrabschnitte 9 aufgeschoben, die durch plastische Verformung biegbare Biegeabschnitte 7 bilden.

Die Befestigungshilfsmittel zur Befestigung des Fluidleitungs-Bundles 1 am Kraftfahrzeug wurden nicht gezeichnet. Sie können an den Rohren 3 selbst oder an den Verbundhilfsmitteln 6 der Rohre 3 zum Fluidleitungs-Bundle 1 angebracht sein.

Im Ausführungsbeispiel sind zwei Rohre 3 als Metallrohre ausgeführt und als das Fluidleitungs-Bundle 1 insgesamt aussteifende Bauteile ausgebildet. Sie erfüllen so gleichsam eine Rückgratfunktion in dem Fluidleitungs-Bundle 1. Nicht gezeichnet wurde, daß die Fluidleitungs-Bundle 1 mit Positionierungshilfsmitteln ausgerüstet sein können, die an Positionierelemente in der Aufnahme der Biegemaschine 8 angepaßt sind.

## Patentansprüche

1. Werkmäßig vorgefertigtes Fluidleitungssystem, welches zur Montage in ein Kraftfahrzeug im Zuge der automatischen Bandfertigung von typisierten Kraftfahrzeugen eingerichtet ist und welches aus einer Mehrzahl von aus Metall und/oder Kunststoff gefertigten Rohren besteht, von denen zumindest einige im montierten Zustand über Abbiegungen an zugeordnete Kraftfahrzeugbauteile fluidtechnisch angeschlossen sind, - mit den Merkmalen
a) die einzelnen Rohre sind gerade Rohre (3), die mit den fluidtechnischen Armaturen (5), die aus funktionellen Gründen oder aus Anschlußgründen erforderlich sind, ausgerüstet sind,
b) die geraden Rohre (3) sind mit Verbundhilfsmitteln (6) zu einem Fluidleitungs-Bundle (1) vereinigt, welches mit den Befestigungshilfsmitteln zur Befestigung im Kraftfahrzeug bei der Montage ausgerüstet ist,
c) von den geraden Rohren (3) weisen zumindest einige im Bereich der nachträglich zum Zwecke der Montage anzubringenden Abbiegungen (4) durch plastische Verformung biegbare Biegeabschnitte (7) auf,
d) die Biegeabschnitte (7) sind einer Biegemaschine (8) angepaßt, die nach Maßgabe des Kraftfahrzeugtyps, für welchen das Fluidleitungs-Bundle (1) bestimmt ist, arbeitet und eingerichtet ist, um die einzelnen Biegeabschnitte (7) der Rohre (3) des in die Biegemaschine (8) eingeführten Fluidleitungs-Bundles (1) zu biegen,
wobei die Biegemaschine (8) im Bereich der Montagestelle für das Fluidleitungs-Bundle (1) der automatischen Bandfertigung aufstellbar ist.

2. Fluidleitungssystem nach Anspruch 1, wobei die geraden Rohre (3) zu einem ebenen Fluidleitungs-Bundle (1) vereinigt und dadurch einer Biegemaschine (8) mit Aufnahme für ein ebenes Fluidleitungs-Bundle (1) angepaßt sind.

3. Fluidleitungssystem nach Anspruch 2, wobei die ebenen Fluidleitungs-Bundle (1) stapelbar ausgeführt sind.

4. Fluidleitungssystem nach einem der Ansprüche 1 bis 3 mit zumindest einigen Rohren (3) aus Kunststoff, die elastisch biegbar sind, wobei diese Rohre (3) im Bereich der Abbiegungen (4) eingeschobene und/oder aufgeschobene Metallrohrabschnitte (9) aufweisen, die durch plastische Verformung biegbare Biegeabschnitte (7) bilden.

5. Fluidleitungssystem nach einem der Ansprüche 1 bis 3, wobei die Befestigungsmittel zur Befestigung am Kraftfahrzeug an den Rohren (3) angebracht sind.

6. Fluidleitungssystem nach einem der Ansprüche 1 bis 3, wobei die Befestigungshilfsmittel zur Befestigung im Kraftfahrzeug an den Verbundhilfsmitteln (6) angebracht sind.

7. Fluidleitungssystem nach einem der Ansprüche 1 bis 6, wobei zumindest eines der Rohre (3) als Metallrohr ausgeführt ist und als das Fluidleitungs-Bundle (1) insgesamt aussteifendes Bauteil (Rückgrat) ausgebildet ist.

8. Fluidleitungssystem nach einem der Ansprüche 1 bis 7, wobei das Fluidleitungs-Bundle (1) mit Positionierungshilfsmitteln ausgerüstet ist, die Positionierelementen in der Aufnahme der Biegemaschine (8) angepaßt sind.

9. Logistikmaßnahme für die Herstellung und die Montage von Fluidleitungs-Bundle nach einem der Ansprüche 1 bis 8: Die Herstellung der Fluidleitungs-Bundle mit den geraden Rohren erfolgt bei einem Zulieferanten des Kraftfahrzeugherstellers, - die Fluidleitungs-Bundle mit den geraden Rohren werden bei dem Zulieferanten im Transportbehälter, z. B. Palettenbehälter, verpackt und danach zu dem Kraftfahrzeughersteller verbracht, - im Bereich des Bandes der automatischen Bandfertigung des Kraftfahrzeugherstellers werden die Transportbehälter entleert und die Fluidleitungs-Bundle werden der dort installierten Biegemaschine übergeben.

10. Logistikmaßnahme nach Anspruch 9, wobei die Biegemaschine im Takt der automatischen Bandfertigung arbeitet und in diesem Takt automatisch auch beschickbar und entleerbar ist.

## Claims

1. A factory-prefabricated fluid line system which is designed for installation in a motor vehicle in the course of the automated assembly line production of motor vehicles divided into types and which consists of a plurality of pipes manufactured from metal and/or plastics, at least some of which pipes, in their installed state, are attached for fluid technology purposes via bends to associated motor vehicle components, comprising the features
a) the individual pipes are straight pipes (3) which are equipped with the fluid technology fittings (5) which are necessary for operational reasons or for connection reasons,
b) the straight pipes (3) are combined with joining means (6) to form a fluid line bundle (1) which is equipped with the fixing means for fixation in the motor vehicle on installation,
c) at least some of the straight pipes (3) comprise bending sections (7) which can be bent by plastic deformation in the region of the bends (4) to be provided subsequently for the purpose of installation,
d) the bending sections (7) are made to fit a bending machine (8) which operates according to the type of motor vehicle for which the fluid line bundle (1) is intended and which is designed to bend the individual bending sections (7) of the pipes (3) of the fluid line bundle (1) which is introduced into the bending machine (8),
wherein the bending machine (8) can be erected in the region of the assembly point of the automated assembly line production facility for the fluid line bundle (1).

2. A fluid line system according to claim 1, wherein the straight pipes (3) are combined to form a flat fluid line bundle (1) and are thereby made to fit a bending machine (8) having a receiver for a flat fluid line bundle (1).

3. A fluid line system according to claim 2, wherein the flat fluid line bundles (1) are of stackable construction.

4. A fluid line system according to any one of claims 1 to 3 comprising at least some pipes (3) which are made of plastics and which can be bent elastically, wherein these pipes (3) comprise metal pipe sections (9) which are pushed in and/or pushed on in the region of the bends (4) and which form bendable bending sections (7) by plastic deformation.

5. A fluid line system according to any one of claims 1 to 3, wherein the fixing means for fixation to the motor vehicle are mounted on the pipes (3).

6. A fluid line system according to any one of claims 1 to 3, wherein the fixing means for fixation in the motor vehicle are mounted on the joining means (6).

7. A fluid line system according to any one of claims 1 to 6, wherein at least one of the pipes (3) is constructed as a metal pipe and is designed as the component (backing rib) which stiffens the fluid line bundle (1) as a whole.

8. A fluid line system according to any one of claims 1 to 7, wherein the fluid line bundle (1) is equipped with positioning means which are made to fit positioning elements in the receiver of the bending machine (8).

9. A logistics measure for the manufacture and installation of fluid line bundles according to any one of claims 1 to 8: the fluid line bundle comprising the straight pipes is manufactured by a supplier of the motor vehicle manufacturer, - the fluid line bundles comprising the straight pipes are packed by the supplier in transport containers, e.g. in palletised containers, and are thereafter delivered to the motor vehicle manufacturer, - the containers are emptied in the region of the line of the automated assembly line production facility of the motor vehicle manufacturer and the fluid line bundles are transferred to the bending machine installed there.

10. A logistics measure according to claim 9, wherein the bending machine operates in phase with the automated assembly line production and can also be loaded and emptied within this phase.

## Revendications

1. Ensemble de conduites de fluide préassemblé en usine, agencé pour le montage dans un véhicule automobile sur une chaîne de fabrication automatisée de véhicules automobiles standard et composé d'une pluralité de tubes en métal et/ou en matière plastique dont au moins quelques-uns sont fluidiquement raccordés, à l'état monté, à des composants de véhicule automobile associés par l'intermédiaire de coudes, **caractérisé en ce** que
a) les différents tubes sont des tubes (3) rectilignes équipés des raccords fluidiques (5) nécessaires pour des raisons de fonctionnement ou de raccordement,
b) les tubes rectilignes (3) sont réunis par des éléments auxiliaires d'assemblage (6) en un faisceau de tubes fluidiques (1) qui est équipé des moyens auxiliaires pour la fixation dans le véhicule automobile lors du montage,
c) au moins quelques-uns des tubes rectilignes (3) présentent, dans la région des coudes (4) à prévoir ultérieurement en vue du montage, des sections flexibles (7) qui peuvent être pliées par déformation plastique,
d) les sections flexibles (7) sont adaptées à une machine à cintrer (8) qui fonctionne et est agencée en fonction du modèle du véhicule automobile auquel est destiné le faisceau de conduites de fluide (1) pour cintrer les différentes sections flexibles (7) des tubes (3) du faisceau de conduites de fluide (1) introduit dans la machine à cintrer (8),
la machine à cintrer (8) pouvant être installée dans la région de l'endroit de montage du faisceau de conduites de fluide (1) de la chaîne de montage automatisée.

2. Ensemble de conduites de fluide selon la revendication 1, caractérisé en ce que les tubes rectilignes (3) sont réunis en un faisceau de conduites de fluide (1) plat et adaptés ainsi à une machine à cintrer (8) agencée pour la réception d'un faisceau de conduites de fluide (1) plat.

3. Ensemble de conduites de fluide selon la revendication 2, caractérisé en ce que les faisceaux de conduites de fluide (1) peuvent être empilés.

4. Ensemble de conduites de fluide selon l'une des revendications 1 à 3, comprenant au moins quelques tubes (3) en matière plastique déformables élastiquement, caractérisé en ce que lesdits tubes (3) comportent dans la région des coudes (4) des sections de tubes métalliques (9) emboîtées et/ou enfilées qui forment des sections flexibles (7) pouvant être courbées par déformation plastique.

5. Ensemble de conduites de fluide selon l'une des revendications 1 à 3, caractérisé en ce que les moyens de fixation pour la fixation sur le véhicule automobile sont montés sur les tubes (3).

6. Ensemble de conduites de fluide selon l'une des revendications 1 à 3, caractérisé en ce que les moyens de fixation pour la fixation dans le véhicule automobile sont prévus sur les moyens auxiliaire d'assemblage (6).

7. Ensemble de conduites de fluide selon l'une des revendications 1 à 6, caractérisé en ce qu'au moins l'un des tubes (3) est réalisé sous la forme d'un tube métallique et forme l'élément (épine dorsale) qui assure la rigidité de l'ensemble du faisceau de conduites de fluide (1).

8. Ensemble de conduites de fluide selon l'une des revendications 1 à 7, caractérisé en ce que le faisceau de conduites de fluide (1) comporte des moyens auxiliaires de positionnement adaptés à des éléments de positionnement dans le logement de réception de la machine à cintrer (8).

9. Mesure de logistique pour la fabrication et le montage de faisceaux de conduites de fluide selon l'une des revendications 1 à 8 : La fabrication des faisceaux de conduites de fluide avec des tubes rectilignes se fait chez le sous-traitant du constructeur d'automobiles, - les faisceaux de conduites de fluide avec des tubes sont emballés chez le sous-traitant dans des caisses de transport, par exemple des caisses palettisables, puis amenés jusqu'au constructeur d'automobiles, - dans la zone de la chaîne de montage automatisée du constructeur d'automobiles, les caisses de transport sont vidées et les faisceaux de conduites de fluide sont transférés à la machine à cintrer installée à cet endroit.

10. Mesure de logistique selon la revendication 9, caractérisé en ce que la machine à cintrer fonctionne au rythme de la chaîne de montage automatisée et qu'elle peut également être alimentée et évacuée automatiquement à ce rythme.
